# EUROPEAN PATENT APPLICATION

(11) **EP 1 813 330 A1**
(43) Date of publication of application: **01.08.2007**
(21) Application number: 06001873.6
(22) Date of filing: 30.01.2006
(51) Int. Cl.: A63F 13/12

(54) **System of developing urban landscape by using electronic data**

(71) Applicant: DotCity Inc., Cyuo-ku Tokyo (JP)
(72) Inventor: Iwasaki, Koji, Tokyo (JP); Kubota, Katsuhiko, Tokyo (JP)
(74) Representative: Kirschner, Klaus Dieter

(57) **Abstract**

The present invention has means for displaying an urban landscape with a food shop zone including a cluster of various restaurants, a sports/hobby zone including baseball stadiums and pools, a living zone including flats and public facilities, a zone for female company employees to get together, and news including weather forecast, fortune-telling and the like as a virtual town and/or a town with reality on a display of a personal computer and/or various mobile terminals, or for displaying an urban landscape as if new facilities are constructed with time; means for plural characters of persons to act freely in the urban landscape including to stroll there, to enjoy shopping, to take a walk and stop by somewhere the person likes, to do or watch sports, and to go to theater; means for creating a self avatar which acts in the same manner as that of the freely acting character of a person in response to a desired inputted command and for issuing the command; and means for registering the self avatar on a network for pay and/or free of charge.

## Description

### Field of the Invention

The present invention relates to a system of developing an urban landscape by using electronic data that enables a user to develop a quite typical urban landscape or an urban landscape simulating an actual town by electronic data via a communication network such as the Internet, wherein a participant in the system can do shopping, go to a theater, or do sports as if the participant is in an actual town and the user can also participate in activities in the town.

### Definition

A "self avatar" in this specification means an actor who creates his avatar or selects his avatar from existing avatars to act in an urban landscape and operates the avatar from his terminal or the like.

An "another person's avatar (the others' avatars)" in this specification means an avatar of another person who operates in the urban landscape from his terminal or the like.

An "operator" in this specification collectively means the "self avatar" and "another person's avatar", which are operated from the terminal or the like, and "sales assistants" who are selling various goods in the town.

A "producer (owner)" in this specification means an actual person who manages the entire urban landscape of the present invention and makes a profit on the town by controlling the functions of the town.

### Description of the Related Art

Games for simulating an actual town and developing the town by using various types of electronic apparatus have been come into fashion recently. For example, game software from Futaba Co.Ltd. "City Bravo" in Japan is a game for creating a town within a predetermined limit and developing the town with time.

Another conventional art is a typical system of running a store by using an electronic medium. That system includes an invention for determining a ratio of expenses among plural outlets in consideration of sales data for each outlet and an area occupied by each outlet on a screen.

The above-mentioned conventional arts have problems: When a purchaser inputs desired goods to search for the goods in the conventional shopping style, a page listing the outlets which carry the desired goods is displayed.

When the purchaser narrows the outlets by using such type of search system, the relationship between the places of respective outlets in the list and the sale of the goods in the respective outlets is low.

Therefore, in the conventional shopping mole, it is impossible to set a charge for opening an outlet with high relationship with the sale of goods.

An operator can buy desired goods quickly and easily in the conventional shopping mole, however, the operator cannot enjoy shopping by touring stores and communicating with the other persons.

In the conventional shopping mole, a purchaser misses one of the attractions of shopping, i.e., touring stores with someone the person likes.

Although expenses of an outlet are related with an area the outlet occupies in the conventional art, the conventional art also has the same problems as those of the conventional shopping mole. The problems are that relationship between the sales of goods and a charge for opening an outlet is low and that a purchaser cannot enjoy shopping by touring stores and communicating with the other persons.

The conventional shopping moles also have a problem in that they are commonly quite different from actual shopping moles and lack in reality. Therefore, the object of the present invention is to solve the above-mentioned problems, propose an urban landscape with reality as alive as an actual town and provide a system of realizing the urban landscape.

### SUMMARY OF THE INVENTION

A feature of the present invention is having means for displaying an urban landscape with a food shop zone including a cluster of various restaurants, a sports/hobby zone including baseball stadiums and pools, a living zone including flats and public facilities, a zone for female company employees to get together, and news including weather forecast, fortune-telling and the like as a virtual town and/or a town with reality on a display of a personal computer (PC) and/or a mobile device, or for displaying an urban landscape as if new facilities are constructed with time; means for plural characters of persons to act freely in the urban landscape including to stroll there, to enjoy shopping, to take a walk and stop by somewhere the person likes, to do or watch sports, and to go to theater; means for creating a self avatar which acts in the same manner as that of the freely acting character of a person in response to another desired inputted command and for issuing the command; and means for registering the self avatar on a network for pay and/or free of charge.

Another feature is having means for the self avatar to rent a room in a flat in the urban landscape for pay and/or free of charge in response to a request from an operator.

Another feature is having means for sending direct mail about various events to be held at facilities in the urban landscape to the room in the flat.

Another feature is having means for recording the free acts of the self avatar in the urban landscape, selecting preference of the self avatar, and sending the direct mail based on the preference to the self avatar's room in the flat.

Another feature is having means for calculating preference of the self avatar with a scheme which weighs the operator's interests and preference such as by counting the number of times the self avatar visits a sports gear sales zone, for example, to weigh "data" based on the calculation to select preference of the self avatar.

Another feature is having means for recording facilities and outlets to which the character of a person freely acting in the urban landscape visits, counting the number of times the character visits the facilities and outlets, and obtaining data for the basis of discount at or invitation to the facilities according to the counted number.

Another feature is having means for the self avatar to enjoy a space of his own in the avatar's flat, also to invite companions who have the same interest as that of the self avatar or close friends whom the self avatar got to know on the network or the like into the room and form a group or a society with the persons, wherein the members of the group or the society go out into the urban landscape and make many new friends or make a new group or a new society with new companions or a new society who have the same interest as those of the self avatar.

Another feature is having means for the registered self avatar to register the friends or society on the network for pay and/or free of charge.

Another feature of the present invention is having means for collecting attribute information on the friends or society, by which the self avatar can collect unique data, so that highly reliable evaluations on the community can be obtained.

Another feature of the present invention is having means for enabling a self avatar to do chat communication with companions who have the same interest as that of the self avatar or close friends via an image distribution system or the like; and means for enabling the self avatar to keep in touch with the companions or the friends.

Another feature of the present invention is having means for enabling a self avatar to buy various goods or tickets at facilities in the urban landscape and accounting means, wherein the operator can also search for goods or tickets on the network at a web site which provides searching services such as "google" to buy the goods or the tickets.

Another feature of the present invention is having means for placing "dot points" at main places in the urban landscape; and means for adding the "dot points" as a self avatar passes plurality of the "dot points" and providing a specific incentive for the operator according to the amount of the points so as to encourage the operator to participate in the urban landscape and visit more outlets or the like in the urban landscape.

Another feature of the present invention is having means for providing the dot points for an operator when the operator increases the member of a society which the operator has formed as an owner with the companions who get along with the operator on the same interest or the same pursuit as that of the operator.

Another feature of the present invention is that the descriptions of the facilities in the urban landscape or the prices and descriptions of various goods or tickets are displayed in balloons.

Another feature of the present invention is having means for enabling an operator to immediately enter into (be displayed in) the urban landscape by using Shockwave Player which is displayed by well-known browsers (e.g., Internet Explorer) without requiring a specific application when the operator downloads the urban landscape.

Another feature of the present invention is having means for displaying Dotblogs at a predetermined place, a flat where a self avatar uses, a hotel in the urban landscape so that unrestricted advertisement for sales promotion or notes for oneself or public relations, a comment for the other persons, a diary, or a trace of a friend who has visited the place are not only displayed in the urban landscape but also displayed on the network as a homepage for releasing the contents of the Dotblogs to public or only to specific persons.

Another feature of the present invention is that all the acts of the self avatar can be recorded on a database or the like and played back.

Another feature of the present invention is having accounting system means which has a producer to produce the urban landscape and collect a certain royalty as a producer fee from the sales of each of the outlets; and penalty adding means for closing an outlet or charging the outlet for a predetermined amount of rent if the sales of the outlet is lower than a predetermined value.

A feature of the present invention is having means for displaying an urban landscape with a food shop zone including a cluster of various restaurants, a sports/hobby zone including baseball stadiums and pools, a living zone including flats and public facilities, a zone for female company employees to get together, and Dotblogs of news including weather forecast, fortune-telling and the like as a virtual town and/or a town with reality on a display of a personal computer and/or a mobile device, or for displaying an urban landscape as if new facilities are constructed with time, and for plural characters of persons to act freely in the urban landscape including to stroll there, to enjoy shopping, to take a walk and stop by somewhere the person likes, to do or watch sports and to go to theater, and for creating a self avatar which acts in the same manner as that of the freely acting character of a person in response to another desired inputted command and for issuing the command; and means for registering the self avatar on a network for pay and/or free of charge; means for the self avatar to rent a room of the flat in the urban landscape for pay and/or free of charge in response to a request from an operator; means for sending direct mail about various events to be held at facilities in the urban landscape to the room; means for recording the free acts of the self avatar in the urban landscape, selecting preference of the self avatar, and sending the direct mail based on the preference to the self avatar's room in the flat; means for calculating preference of the self avatar with a scheme which weighs the operator's interests and preference such as by counting the number of times the self avatar visits a sports gear sales zone, for example, to weigh "data" based on the calculation to select preference of the self avatar; a system of recording facilities and the like to which the character of a person freely acting in the urban landscape visits, counting the number of times the character visits the facilities and the like, and obtaining data for the basis of discount at or invitation to the facilities according to the counted number; a system of the self avatar to enjoy a space of his own in the avatar's flat, also to invite companions who have the same interest as that of the self avatar or close friends whom the self avatar got to know on the network or the like into the room and form a group or a society with the persons, wherein the members of the group or the society go out into the urban landscape and make many new friends or make a new group or a new society with new companions or a new society who have the same interest as those of the self avatar; a system of the registered self avatar to register the friends or society on the network for pay and/or free of charge; a system of collecting attribute information on the friends or society, by which the self avatar can collect unique data, so that highly reliable evaluations on the community can be obtained; a system of enabling a self avatar to do chat communication with the companions who have the same interest as that of the self avatar or close friends via an image distribution system or the like; a system of enabling the self avatar to keep in touch with the companions or the friends; a system of enabling a self avatar to buy various goods or tickets at facilities in the urban landscape and an accounting system, wherein the operator can also search for goods or tickets on the network at the web sites which provides searching services such as "google" to buy the goods or the tickets; a system of placing "dot points" at main places in the urban landscape; a system of adding the "dot points" as a self avatar passes plurality of the "dot points" and providing a specific incentive for the operator according to the amount of the points so as to encourage the operator to participate in the urban landscape and visit more outlets or the like in the urban landscape; a system of providing the dot points for an operator when the operator increases the member of a society which the operator has formed as an owner with the companions who get along with the operator on the same interest or the same pursuit as that of the operator; wherein the descriptions of the facilities in the urban landscape or the prices and descriptions of various goods or tickets are displayed in balloons; a system of enabling an operator to immediately enter into (be displayed in) the urban landscape by using Shockwave Player which is displayed by well-known browsers (e.g., Internet Explorer) without requiring a specific application when the operator downloads the urban landscape; a system of displaying Dotblogs at a predetermined place, a flat where a self avatar uses, a hotel in the urban landscape so that unrestricted advertisement for sales promotion or notes for oneself or public relations, a comment for the other persons, a diary, or a trace of a friend who has visited the place are not only displayed in the urban landscape but also displayed on the network as a homepage for releasing the contents of the Dotblogs to public or only to specific persons; wherein all the acts of the operator can be recorded on a database or the like and played back; an accounting system of a producer of the urban landscape to collect a certain royalty as a producer fee from the sales of each of the outlets; and a penalty adding system of closing an outlet or charging the outlet for a predetermined amount of rent if the sales of the outlet is lower than a predetermined value.

Another feature is having an advertising information displaying section such as a banner at an appropriate place in the virtual town and/or town with reality, wherein the displaying section displays necessary OR/AND optional information in the information by characters or image information with a link to another site (homepage) on the network.

Another feature of the present invention is having an advertisement displaying site owner in a virtual town and/or a town with reality which displays the advertising information displaying section such as a banner, an advertiser such as an EC merchant, an advertising information displaying section such as a banner, and a banner advertisement agent called an affiliated service provider for going between the advertisement displaying site owner and the advertiser; wherein a self avatar in the virtual town and/or the town with reality chooses an information displaying section displayed on the virtual town and/or the town with reality, and when the self avatar selects (clicks a mouse button on) the information displaying section, the page transfers to the advertiser's site (homepage) via a preset link, and when the self avatar accesses the advertiser's site (homepage), the advertiser pays a fee or a reward to the advertisement displaying site owner and/or the advertisement agency.

Another feature of the present invention is having means for an operator to buy various goods or tickets at facilities in the urban landscape; accounting means; and means for placing "dot points" at main places in the urban landscape; means for adding the "dot points" as a self avatar passes plurality of the "dot points" and providing a specific incentive for the operator according to the amount of the points so as to encourage the operator to participate in the urban landscape and visit more outlets in the urban landscape; and means for converting a fee or a reward paid to the advertisement displaying site owner and/or the advertisement agency to "dot points" so that the advertisement displaying site owner and/or the advertisement agency can pay a part or whole of the fee or the reward to a self avatar in a virtual town and/or a town with reality as "dot points". Another feature of the present invention is that the fee or the reward is required every time when the self avatar selects (clicks a mouse button on) the advertiser's site (homepage). Another feature of the present invention is that the fee or the reward in the case described in claims 1 to 23 is required according to the number of times an advertisement information displaying section such as a banner is displayed in a virtual town and/or a town with reality.

Another feature of the present invention is the fee or the reward is required according to whether or not the self avatar selects (clicks a mouse button on) the advertiser's site (homepage) and buys something there or is registered to the company via the advertisement.

Another feature of the present invention is the fee or the reward is required when the self avatar introduces a new self avatar.

Another feature of the present invention is that the advertisement information displaying section such as a banner includes a poster, a sign board, an advertising balloon, an electronic bulletin board (dot vision), an airship, various handed out presents, word of mouth, a town guiding magazine, and a mail-order catalogue displayed in a virtual town and/or a town with reality.

Another feature of the present invention is having means for displaying an urban landscape with a food shop zone including a cluster of various restaurants, a sports/hobby zone including baseball stadiums and pools, a living zone including flats and public facilities, a zone for female company employees, and news including weather forecast, fortune-telling and the like as a virtual town and/or a town with reality on a display of a personal computer and/or various mobile terminals, or for displaying an urban landscape as if buildings are constructed as new facilities with time, means for plural characters of persons to act freely in the urban landscape including to stroll there, to enjoy shopping, to take a walk and stop by somewhere the person likes, to do or watch sports and to go to theater, means for creating a self avatar which acts in the same manner as that of the freely acting character of a person in response to another desired inputted command and for issuing the command; means for enabling the self avatar to be registered on the network for pay and/or free of charge; and calling means with a configuration for using motion pictures and audio over networked circuits including a wired or a wireless LAN or a stand-alone device, wherein the calling means is means for enabling an operator to talk with plural operators simultaneously, and the calling means has means for selecting one or more still pictures including characters, graphics and photographs and/or motion pictures and audio and combining them.

Another feature of the present invention is having the calling means with a configuration which can record as calling information by the communication means on a recording medium in a server system or the like. Another feature of the present invention is having calling means for an operator to talk with one or more operators by using motion pictures and audio over networked circuits including a wired or a wireless LAN or a stand-alone device as calling information by the communication means, wherein only the above-mentioned one or more operators can call each other.

Another feature of the present invention is having calling means for an operator to talk with one or more operators by using motion pictures and audio over networked circuits including a wired or a wireless LAN or a stand-alone device as calling information by the communication means; wherein the means actually has a form of talking with a sales assistant (operator) and provides various questions and answers and the other various types of information on sales including information on various recommended goods, colors and sizes.

Another feature of the present invention is having means for previously disclosing personal information particularly on a shopper (operator) provided by the communication means to the sales assistant (operator).

Another feature of the present invention is having means for storing still pictures including characters, graphics and photographs and/or motion pictures and audio of calling information by the communication means on a display of a personal computer and/or various mobile terminals of a sales assistant, if the pictures are not received due to such as absence of the sales assistant (operator).

Another feature of the present invention is having a function of enlarging and displaying an image of calling information by the communication means desired by one or more persons which is displayed on the display of a personal computer and/or various mobile terminals of a sales assistant (operator) and/or a shopper (operator).

Another feature of the present invention is having a configuration which can include means for displaying side by side the images of calling information by the communication means desired by one or more persons which is displayed on the display of a personal computer and/or various mobile terminals of a sales assistant (operator) and/or a shopper (operator).

Another feature of the present invention is having communication means between the sales assistant (operator) and the shopper (operator) which enables an image of certain goods information to be changed to an image of other goods information as required.

Another feature of the present invention is that the means for communicating between the sales assistant (operator) and the shopper (operator) has means for obtaining shopper's preference and requirement information, means for retrieving information matching or resembling the previously recorded shopper's requirement, and means for providing shopper's advisory information to buyers by images or characters and graphics for the information.

Although the present invention has many superior operations and advantages in addition to the advantages to be described below, they will be described in the detailed description of examples. The main advantages of the present invention will be described below:

In general, an advantage of the present invention are that an urban landscape of the present invention is displayed as a typical downtown with reality as much as possible, wherein a person (i.e., an operator and a user) can enjoy shopping at home with reality as if the person go out into an actual downtown such that the person can stroll in the urban landscape and, for example, do shopping on the network at a department store, watch an actual baseball game between desired teems at a baseball stadium (on the TV or the like), select a counterpart and play a board game with the counterpart at a "go" or "shogi" parlor on the network, study a menu at a restaurant before visiting the real restaurant, call for food delivery, check news including weather forecast and fortune-telling on an electric bulletin board.

Another advantage of the present invention is that an operator's interest is developed as population in the urban landscape increases, or more and more information on such as fashion are introduced in the urban landscape and outlets for selling new interests or new preference are constructed and opened one after another as if the outlets are actually constructed and opened.

Another advantage of the present invention is that an operator can have his own room in the urban landscape for pay and/or free of charge to be a resident of the town.

Another advantage of the present invention is that direct mail about various events to be held in a certain facility in the urban landscape is delivered to the own room. In such a case, when it is determined that the self avatar likes baseball, direct mail which would likely to be wanted by the self avatar, such as recommendation of baseball goods, is delivered.

One of the advantages of the present invention is to record facilities the self avatar drops by and count the number of times the self avatar drops by the facilities and provide discount or a letter of introduction for the facilities according to the counted number in order to keep the self avatar who freely tours in the urban landscape staying in the urban landscape as long as possible.

Another advantage of the present invention is that a person can not only act by himself but can form a group or a society with companions with the same preference of his own or close friends on the network so that the person can make many friends on the network or out of the network or make a new group with companions or society of the same interests as those of the person.

Another advantage of the present invention is that, attribute data of the new society is provided for a person as information for making decision when the person is considering whether a person and/or a society of the person should form a new society with a new society or a new friend, so that the person can always select an appropriate new society or friends for the member of his society.

Another advantage of the present invention is that a person can do chat communication by using image distribution system or the like with companions who have the same interest as that of the person or close friends and deepen friendship as watching the friends' faces as needed.

Another advantage of the present invention is that a person can buy things easily as the person can search for various goods or tickets on the network at a web site which provides searching services such as "google" to buy the various goods or the tickets, for example, at a facility in the urban landscape.

Another advantage of the present invention is that dot points obtaining places are scattered for the main places in the urban landscape secretly or openly and the dot points are added as an operator passes a plurality of the dot points and providing an incentive for the operator according to the amount of the points and greatly attracting the operator so as to encourage the operator to stay in the urban landscape as long as possible.

Another advantage of the present invention is to keep an operator staying in the urban landscape much longer by adding the dot points when the operator increases the number of the member of a society which the operator has formed as an owner.

Another advantage of the present invention is to encourage an operator to buy more goods or tickets by displaying the descriptions of the facilities in the urban landscape or the prices and descriptions of goods or tickets in so-called balloons, using balloons of characters simultaneously with patterns of the town.

Another advantage of the present invention is to enable an operator to easily download recorded (saved) information without requiring a specific application.

Another advantage of the present invention is to display Dotblogs at a predetermined place, a self avatar's flat or the like in the urban landscape so that unrestricted advertisement, notes for oneself, public relations, or a comment for the other persons can be displayed.

In such a case, the Dotblogs can be selected as required according to the number of participating persons.

Another advantage of the present invention is to always make the urban landscape alive to answer to the operator's preference by having the producer (actual person: owner) of the urban landscape collect a royalty from the sales of each of the outlets opened in the urban landscape, have an authority to add penalty such as to close the outlet or charge the outlet for a predetermined amount of rent if the sales of the outlet is lower than a predetermined value and have administration means and the system of the same.

Particularly the present invention includes an advertisement information displaying section consisting of necessary or arbitrary information displayed by characters and images in a banner at an appropriate place in the virtual town and/or the town with reality and a link to the other sites (homepages) so that when an operator wants detailed information about the information or wants to know how large or how reliable the advertiser such as the EC merchant is, the operator can easily jump to the advertiser's homepage by clicking a mouse button on the link and easily obtain information on goods the advertiser is selling or the other desired information at once.

Another advantage of the present invention is to enable a site owner who wants to display advertisement to be added, used and charged easily by having an advertisement agent called affiliated service provider which goes between an advertisement displaying site owner and an advertiser of the displayed advertisement.

Another advantage of the present invention is to have means for converting a charge or an incentive paid to the advertisement displaying site owner and/or the advertisement agency to "dot points" which are used as if currencies in the urban landscape of the present invention so that the present invention can enhance advertising effect of the site owner by giving the dot points to the self avatar who accessed the advertisement, for example to promote more self avatars to watch the advertisement.

Another advantage of the present invention is to encourage the self avatar to buy goods or the like by attracting the self avatar with the dot points to be returned to the self avatar, wherein the dot points are given according to the number of times the self avatar accesses the advertiser's site (homepage) or the number of times the advertisement information displaying section such as the banner is displayed in the urban landscape or the sales increase made by the self avatar when the self avatar accesses the advertisement information and buys the advertised goods or the like.

Another advantage of the present invention is that the dot points to be returned to the self avatar are also returned to the self avatar when the operator suggests or recommends another operator to access the advertisement.

Another advantage of the present invention in addition to the above-mentioned advantages is to greatly appeal to an operator by placing dot points obtaining places at main places in the urban landscape secretly or openly to keep an operator staying in the urban landscape as long as possible, adding dot points as an operator passes a plurality of the dot points so that the operator is given dot points incentives according to the amount of the dot points the operator has passed.

The system is more attractive if it is adapted to display Dotblogs at predetermined places, a self avatar's flat and the like in the urban landscape so that unrestricted suggestion, notes for oneself, public relations or a comment for the other persons can be displayed and dot points are also added when an operator views the Dotblogs.

Another advantage of the present invention is that a shopper (operator) who is enjoying shopping in the urban landscape does not use electric mail, which is unpopular to operators, in buying goods or the like. The present invention seldom causes electric mail-related problems in that a shopper ignores or deletes an important electric mail as the mail is recognized as spam mail or so-called virus-laden mail, which is a public concern as advertising mail is delivered easily, by discarding the mail in a trash box.

As attribute information about buying inclination of a shopper (operator) is previously given to a sales assistant (operator) such as a shop keeper in the urban landscape in the present invention, the sales assistant needs not to be trained nor sales needs not to be widened specially.

The attribute including behavior of a shopper (operator) in the urban landscape, for example, which society the shopper has participated in, whether the shopper made a friend or not, the shopper's purchase history or visitation history at outlets opened in past are recorded in a server to be retrieved and provided for the sales assistant (operator). Another advantage of the present invention is to process, for example, narrow the attribute so that highly reliable data can be reflected in the communication with the shopper (operator).

Another advantage of the present invention is that when a sales assistant (operator) attends one or more persons, the sales assistant can only talk with a shopper (operator) so that a talk between a shopper and a sales assistant is not leaked outside.

The present invention has a function of displaying a number of goods requested by a shopper (operator) on a display of a terminal of the shopper, or a function of showing different goods one after another, for example, during a sales talk between a sales assistant (operator) and the shopper via a call. The shopper not only can freely select desired goods by using the functions but also the sales assistant can enlarge and display the image of the goods the sales assistant recommends among all the goods to attract the shopper.

The sales assistant can also show why he recommends the goods to the shopper by characters or graphics.

The present invention has good operations and advantages other than those described above and they will be apparent by reading the detailed description of the embodiments below.

### BRIEF DESCRIPTION OF THE DRAWINGS

FIG. 1 is a block diagram showing a method for developing an urban landscape on a network and entire operational means of a first embodiment of the present invention;

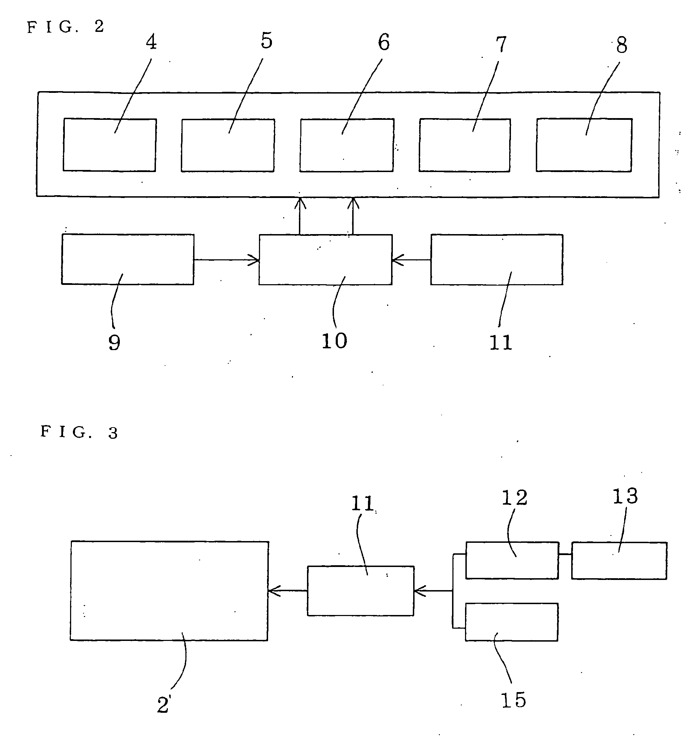

FIG. 2 is a block diagram of the urban landscape and facilities;
FIG. 3 is a block diagram of a system and operational means of a self avatar to freely act in the urban landscape;
FIG. 4 is a block diagram of a system and operational means of a self avatar to freely act in the urban landscape;
FIG. 5 is a block diagram of a system and operational means of a self avatar to freely act in the urban landscape;
FIG. 6 is a block diagram of a system and operational means of a self avatar to freely act in the urban landscape;
FIG. 7 is a perspective diagram of the entire urban landscape;
FIG. 8 is a perspective diagram illustrating the entire urban landscape;
FIG. 9 is persons' characters to be selected (a reference diagram for an avatar);
FIG. 10 is a perspective reference diagram showing a room of a self avatar;
FIG. 11 is a perspective diagram illustrating a central part of the urban landscape, showing another embodiment;
FIG. 12 is a diagram showing an example of balloon;
FIG. 13 is a diagram showing a menu screen for collecting members of groups and societies;
FIG. 14 is a diagram showing acts of a self avatar;
FIG. 15 is a schematic block diagram of a dot point system;

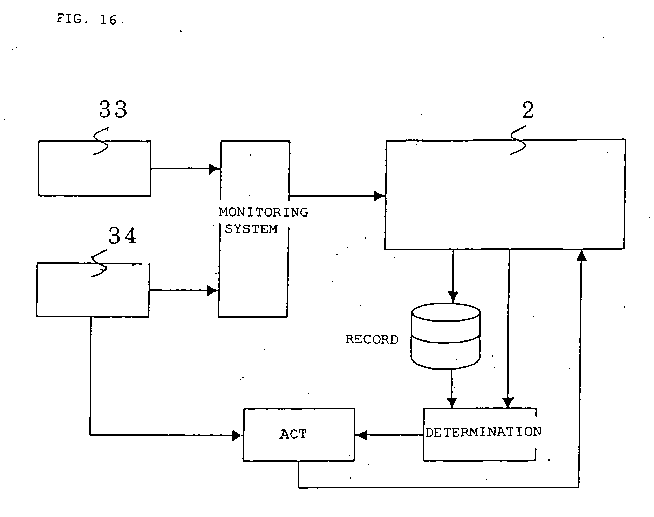

FIG. 16 is a block schematic diagram showing how prosperous a town is;
FIG. 17 is a block diagram showing another embodiment of adding dots;

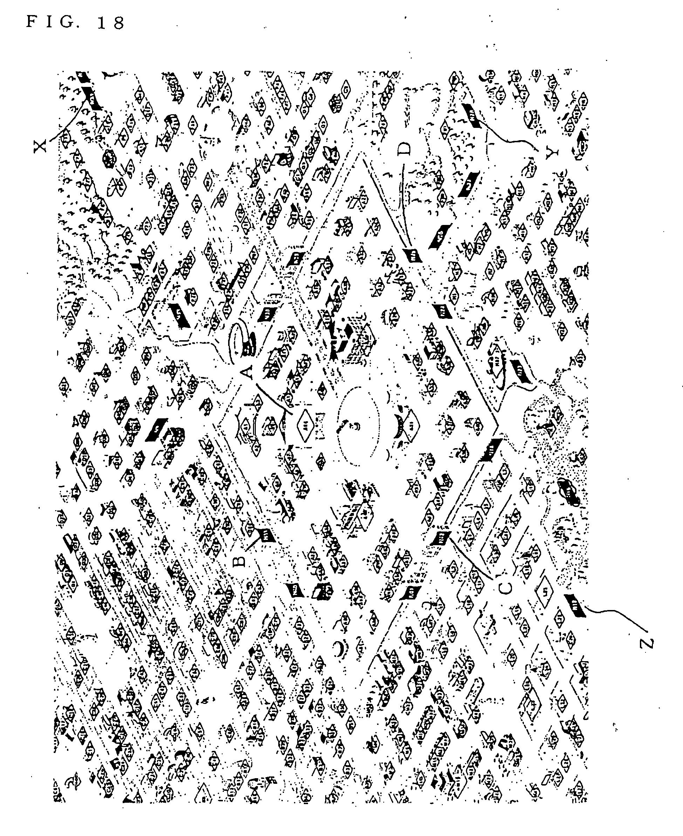

FIG. 18 is a perspective diagram illustrating how prosperous a town is; and
FIG. 19 is a block diagram showing an embodiment of communication means.

### DETAILED DESCRIPTION OF THE PREFERRED EMBODIMENTS

Each system and operational means of the present invention will be described with reference to drawings.

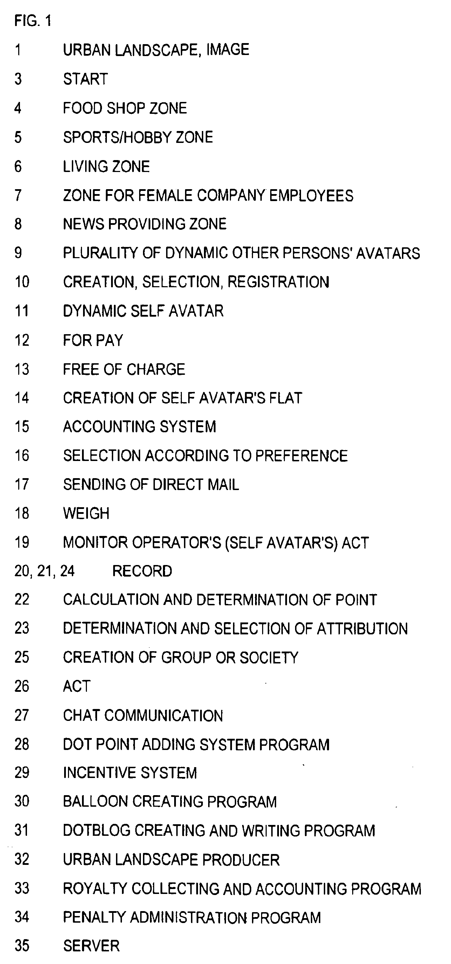

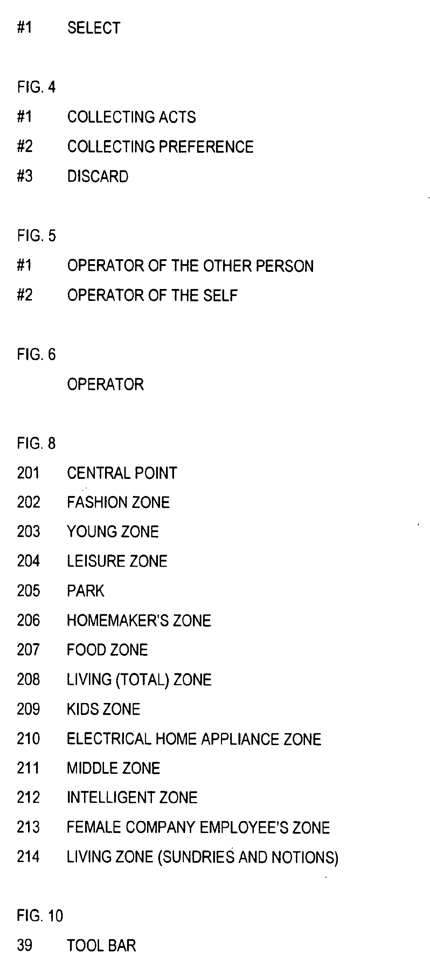

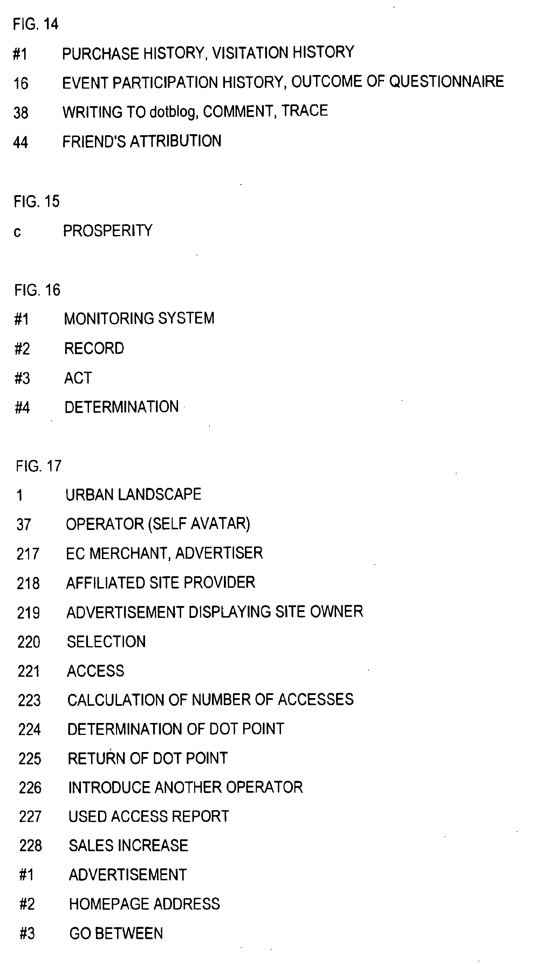

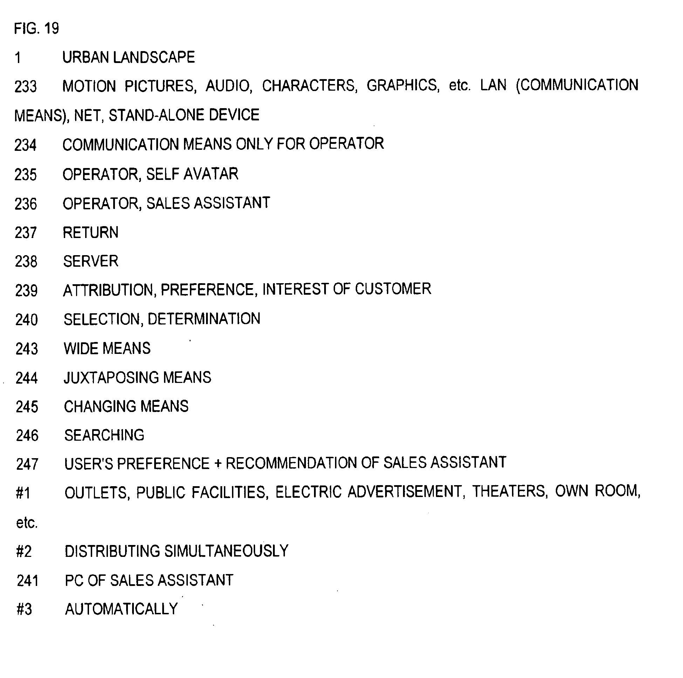

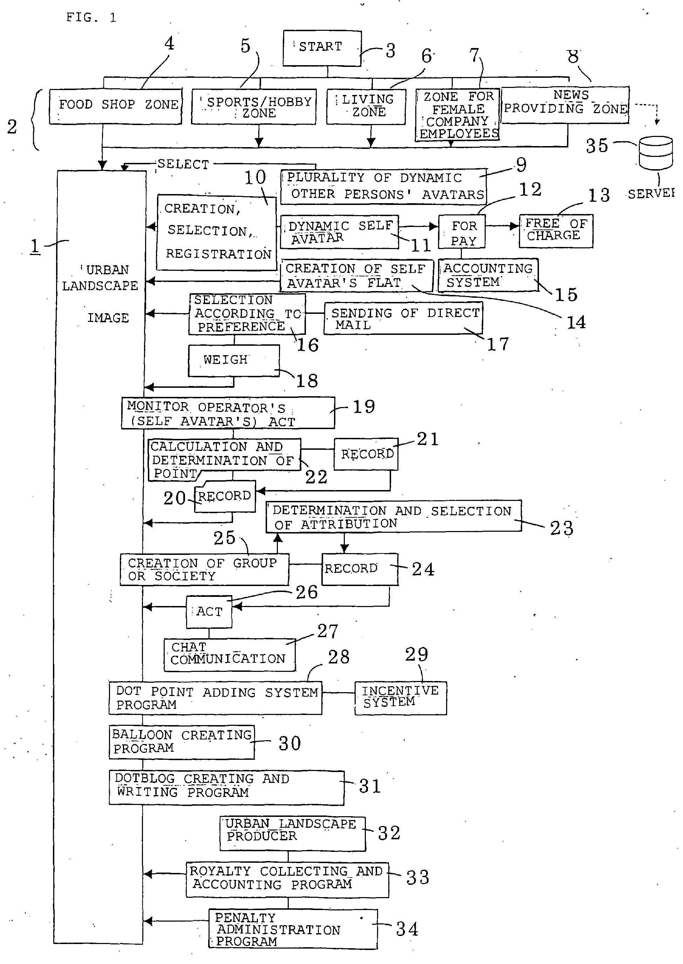

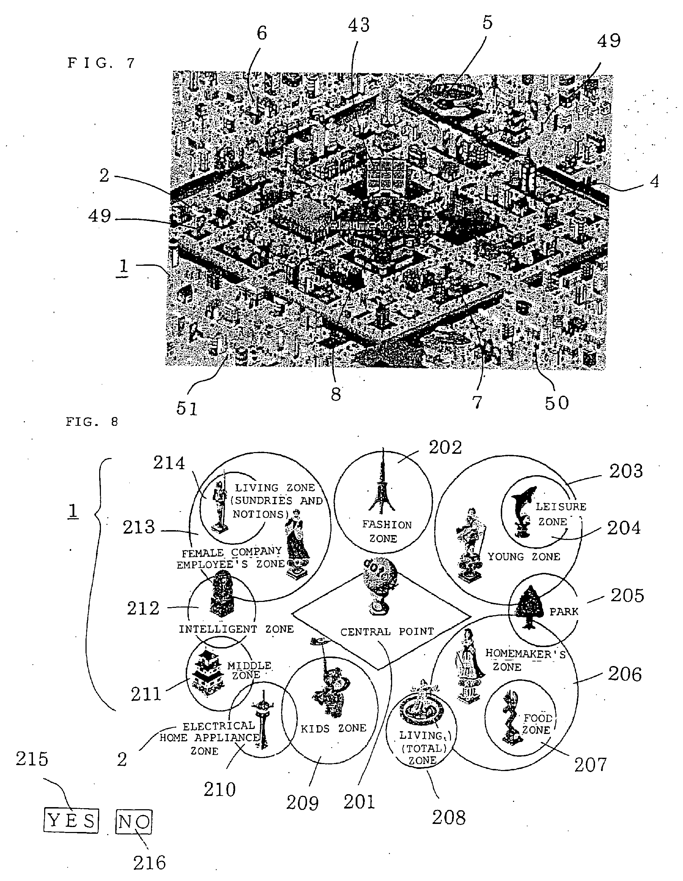

In FIGS. 1 and 7, the reference numeral (1) denotes an urban landscape, (2) denotes a place for displaying outlets in various types of store, including (4) denoting a food shop zone with a cluster of various restaurants, (5) denoting a sports/hobby zone with baseball stadiums and pools, (6) denoting a living zone with one's room such as flats, public facilities and the like, (7) denoting a zone in which young person or female are getting together, such as a zone for female company employees, (8) denoting a place for displaying news such as weather forecast, fortune-telling and the like on a display of a personal computer and/or mobile device as a virtual town and/or a town with reality. It is important to represent a typical downtown with reality as much as possible.

It is also important to provide means and system for forming an urban landscape as if new outlets carrying new types of goods or new outlets of new interest or new preference are constructed and opened one after another as time passes as well as population of operators (user, self avatar, and the other's avatar) increases.

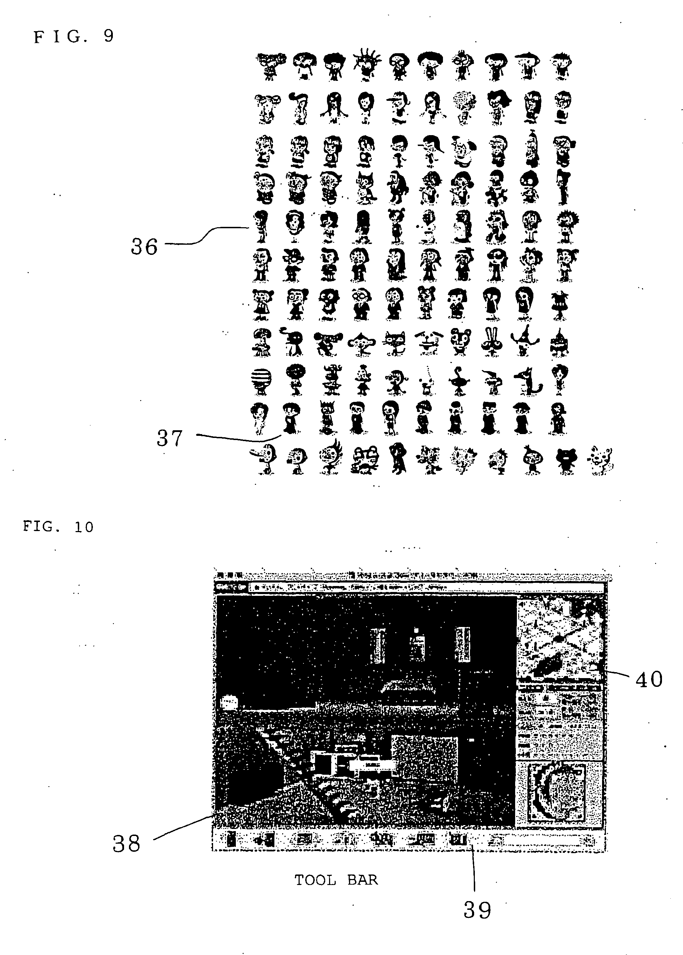

In creating facilities of the urban landscape (1) including arranging the facilities in the urban landscape, the present invention is not limited to this embodiment. As shown in FIG. 8, the urban landscape (1) can be freely formed with facilities and stores of a fashion zone for selling clothes (202), a young zone for selling pairs of sneakers (204), a leisure zone for selling tents (203), a park (205), a homemaker's zone for selling kitchenware (206), a food zone including restaurants (207), a residential zone including flats (208), a kids zone for selling toys (209), an electrical home appliance zone for selling a television set, a radio and the like (210), a middle zone for selling suits and the like (211), an intelligent zone including a library, a museum and a movie theater (212), a female company employee' s zone for selling cosmetics and the like (213), a sundries and notions zone for selling a carpenter's tool and the like (214) being arranged concentrically around a monument (201).

A preferable process of forming the urban landscape (1) is: Construct public facilities such as the park (205), then collect candidates for outlet's owner under certain conditions and construct the above-mentioned various outlets (2). The candidates for outlet's (2) owner can be collected after the urban landscape (1) is roughly laid out.

Although means for opening the outlets (2) is not shown nor described in detail, the outlets can be easily constructed and set by using well-known programs and devices which can create outlets.

It is a matter of course that candidates for outlet's owner (2) need to perform a procedure of opening an outlet, for which each candidate inputs data about the candidate's name or the company's name, a period for running an outlet, a desired place for opening an outlet in the urban landscape (1), a charge for opening an outlet depending on the place for the outlet from a terminal device of the candidate.

The procedure for opening an outlet is also performed by outlet-opening procedure sending means at a terminal device for opening an outlet in well-known means or public means. The outlet-opening procedure sending means includes a sending program in programs previously downloaded from a method for constructing and managing the urban landscape (1) and a data sending unit in the candidate's terminal device.

Data about a procedure of opening an outlet is sent to a server (35) of a provider, from which the data is sent to an outlet-opening management system via the Internet (neither described nor shown in detail) and saved and recorded there.

Although the urban landscape (1) has a feature of representing a typical contemporary downtown as real as possible, it is more attractive to include a railway service and a bus service for pay (12) and/or for free charge (13) as population increases or a new town develops or public relations leads operators to a hot spring resort as time passes.

FIG. 8 is a diagram showing an example of a top page of a homepage displayed on a screen of a user's terminal device by means for constructing the urban landscape (1).

The top page is also function as a screen for a user to determine whether or not to download software of the urban landscape (1). That is to say, when the user clicks a mouse button on "YES" button (215) on the screen of an operator's terminal device, the software starts to be downloaded (start (3) in FIG. 1).

When the user clicks a mouse button on "NO" button (216), the software is not downloaded. Although a 3D image of the urban landscape (1) is shown in the top pages of FIGS. 7 and 8, the urban landscape (1) is adapted to change as the town is developed or buildings are constructed.

In addition, the urban landscape (1) may be displayed by 2D image instead of 3D image. It is a matter of course that a user can enjoy shopping or the like with more reality in the urban landscape (1) displayed by 3D image.

In the urban landscape (1), plural different person's characters (9) [if a person's character (9) is operated by another person, the person's character is called "another person's avatar (36)"] are acting as they like including strolling, shopping, stopping by somewhere, doing sports, watching sports and viewing a play. A program that enables animals such as a dog and a cat to wander has also been developed (10).

As shown in FIG. 1, a program has been developed to place a self avatar that freely acts in the urban landscape (1) in response to a desired command inputted by an operator [in most cases, the operator is a user who wants to enter the urban landscape (1) by oneself for doing something such as doing shopping] for the urban landscape (1).

The program starts from a procedure in which a user selects (11) a self avatar from a server (35) of a manager (owner) of the present system from the user's terminal device and registers the self avatar in the system.

Most preferably, a user selects a desired person's character from the other persons' avatars (36), which are person's characters previously registered on the network as shown in FIG. 9, and makes the selected character as the self avatar (37), which acts in the urban landscape (1) as the user wants it to.

The other persons' characters (36), which are persons' characters other than the self avatar (37) and the other characters such as a dog and a cat in FIG. 9 are placed in the urban landscape (1) and acting freely in the urban landscape (1).

The operator [self avatar (37)] may be registered for free of charge (13) and/or for pay (12). Generally, the operator is registered for pay. It is a matter of course that the embodiment has a recording and accounting system (15) of recording operations including charging for registration, payment for registration, issuance of a registration card, a password and the like.

The user uses the user's terminal device and connects to a provider's server from an access point (not shown) then to the developed urban landscape (1) via the Internet.

The user can create a self avatar (37) in the urban landscape (1) displayed on a screen of the user's terminal device and enjoy various activities in such a manner as playing a game, such as to study menus of various foods and obtain information to access the actual restaurants at the food shop zone (4), watch a film in a movie theater as if in the actual movie theater or an actual professional baseball game in a baseball stadium at the sports/hobby zone by well-known video distribution system, to select clothes the user wants and buys it on the network at a zone for young persons or young female to get together (7), and check tomorrow's weather forecast or today's fortune-telling at a place for displaying news (8).

FIG. 10 shows another embodiment of the present invention. In FIG. 10, a user can create (14) the self avatar's (37) own room (38) in a flat, for example, at a desired location in the urban landscape (1) and own the room, as required.

The own room (38) may be rent for pay and/or for free of charge. It is a matter of course that the embodiment has registration procedure, recording means and an accounting system including for the rent formed by the well-known systems.

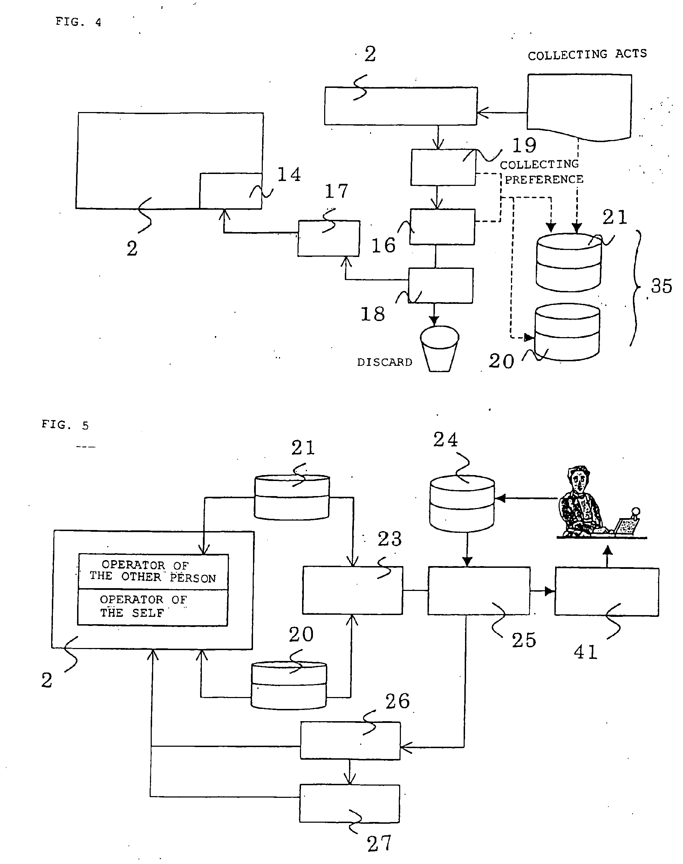

Another embodiment of the present invention is to include means for delivering direct mail about various events in facilities in the urban landscape (1) to the self avatar's own room (38) in a flat as shown in FIG. 4.

In this case, the embodiment has means (17) for recording the number of times the operator [here, the self avatar (37) walking in the urban landscape (1)] visited the sports zone, for example, from the operator's free acts in the urban landscape (1), finds out (16) the operator when the direct mail is sent and the self avatar's (37) preference, such as "the operator likes sports" and sends the direct mail based on the preference to the self avatar's room (38) in a flat.

The operator, i.e., the self avatar (37) recognizes whether or not the direct mail is sent to the room by well-known means such as a tool bar (39) on a screen of the user's terminal device or a new window (40) on the screen automatically opened as shown in FIG. 10 when the operator, i.e., the self avatar (37) comes back to the room (38).

In such a manner, meaty direct mail based on the preference is delivered to the operator, i.e., the self avatar (37). As means for finding preference with more weights (18) of the operator, the user, or the self avatar (37), only the number of times the user or the self avatar (37) visits a particular zone in the zones in the urban landscape (1), for example, needs to be counted.

That is because, the embodiment is adapted to calculate (22) preference with a scheme for weighing data (19) based on the weight (18) and calculation to support the preference, such that the number of times the user or the self avatar (37) visits the sports zone (5) is recorded (20), (21) and if the number of times for the sports zone (5) is more than that for the other zones, it supports that the user or the self avatar (37) prefers sports.

Next, the user or the self avatar (37) can not only enjoy himself/herself in the own room (38) but also invite companions who made friends with in the urban landscape (1) who have the same interest as that of the self avatar (37) or close friends to the room (38) and form a group or a society with the persons (25) as shown in FIG. 5.

When the user or the self avatar (37) selects the friends and/or the society, the user or the self avatar (37) can record (24) selection (23) of attribute of the friends and/or the society (in other words, determination of whether the person or the persons are a friend or a society with the same interest as that of the self avatar (37)) as a reference so that the user or the self avatar (37) can collect unique data in collecting attribute information on the friends or the society.

In this case, the user or the self avatar (37) can found a group or a society. The member of the group or the society can go out into the town and make many new friends or make a new group with companions or a society with the same interest as that of the user or the self avatar (37).

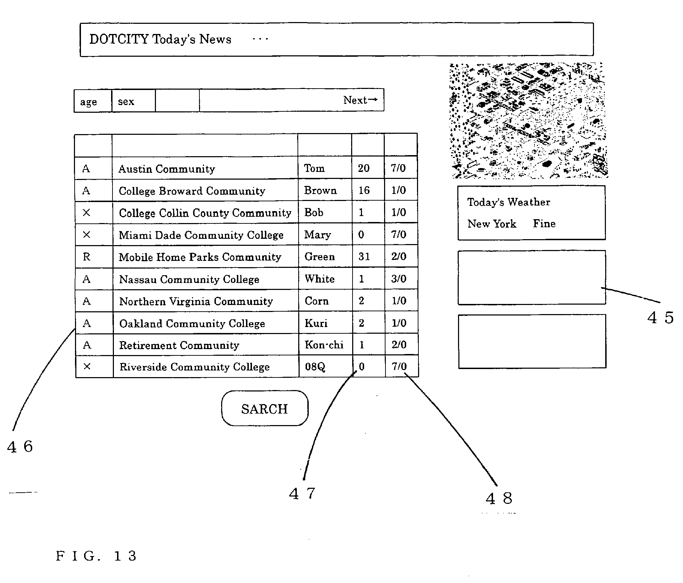

As means in this case, a menu screen (45) for collecting members of a group or a society as shown in FIG. 13 is preferably displayed on a terminal device of the user or the self avatar (37), or the other operators or the other persons' avatars (36).

The menu screen (45) displays messages like "Get together teens" and "fashion conscious society". The menu screen (45) changes to a menu of procedures to be a member of a group when the person who wants to be a member of the group clicks a mouse button on the display (46).

The menu screen (45) preferably displays the current number of participants (47) and the number of registered members (48). In this case, a system for an operator to register the friends and/or the society on the network for pay and/or free of charge is also available.

Acts (26) with the companions with the same interest or close friends can preferably proceed by chat communication (27) via an image distribution system or the like so that the user or the self avatar (37) can always exchange messages with the friends and the like.

For the configuration, a well-known distance determination system (41) for determining whether a distance between the self avatar (37) and the other person's avatar (36), as in FIG. 5, first, which is another operator's character, is a predetermined distance available for persons to talk with, i.e., a distance available for a person to hear what the other person says in the urban landscape (1) may be used.

The distance determination system (41) has a function of approaching status recognition means and a function of determining a distance between each self avatar (37) and each of the other persons' avatars (36). The distance determination system (41) sends a signal for allowing self avatars (37) within a distance available for persons to talk with to display his/her words to the output display controlling section (not shown).

The embodiment is adapted not to send the signal to the output display controlling section for self avatars (37) outside the distance available for persons to talk with.

The output display controlling section is a component for allowing a self avatar (37) to display his/her words based on the signal from the distance determination system (41) and means for changing output availability status.

Not all the words of the other characters within the distance available for the self avatar (37) to talk with are displayed. A user can talk with the other characters only after selecting to talk by clicking a mouse button or the like on place indicating the selection from the user's terminal device.

The self avatar (37) can display his/her conversation only with the other persons' avatars (36) which previously expresses to do chat with someone (27).

Therefore, the self avatar (37) can only talk when the other operator(s) who wants to do chat with someone (27) are currently operating and the operators' avatars are staying within a predetermined distance from the self avatar (37) and the operator of the self avatar (37) selects to do chat (27) with the other persons' avatars (36).

In this case, it is a matter of course that the other person's avatar (36) has a function as responding means, which is a component for processing of responding.

Specifically, when the self avatar (37) inputs an inquiry from a user's terminal device to the other persons' avatars (36), the inquiry is sent to the responding system. The responding system not only decodes the inquiry and responds to it but also retrieves an appropriate response previously stored in a recording unit (24).

Then, the appropriate response is displayed on terminal devices of both of the operators via the responding system. If the inquiry is complicated or makes no sense, the responding unit cannot retrieve an appropriate response.

In such a case, the responding unit preferably retrieves character data such as "input your inquiry from the beginning again" from the recording unit (24) and sends the data to a terminal device of who sends the inquiry.

If the self avatar (37) talks with the other person's avatar (36) and finds the other person's avatar (36) has attribute in common with the self avatar (37) such as both of them have common interest or common preference and the self avatar (37) wants to make friends of the other person's avatar (36) or make the other person's avatar (36) a member of the self avatar (37)'s society, the self avatar (37) first introduces himself/herself to the other person's avatar (36) as in the real world.

Although the self avatar (37) and the other person's avatar (36) may introduce themselves each other by exchanging business cards, the self avatar (37) should obtain information on the other person's avatar as detailed as possible including his/her age, a common interest and the address of the other person's avatar (36).

Introduction information exchanged between the avatars is generally stored in the common recording unit (24). When the self avatar (37) determines the other person's avatar (36) and sends character data such as "let me introduce myself to you" by using the operator's terminal device and the other person's avatar (36) answers "YES", process of providing data possessed by the other person's avatar (36) which is determined at the recording unit (24) of the introduction information unit for the self avatar (37) is performed.

The self avatar makes friends with persons one after another in this manner. In such a case, the operator (self avatar (37)) invites the persons and founds (25) a society as a founder (owner).

In this case, the self avatar (37) can register on the network that the self avatar (37) made friends and/or a society for pay or free of charge.

Another embodiment of the present invention does many kinds of efforts to keep the self avatar (37), the other persons' avatars (36) or the societies staying in the urban landscape (1) as long as possible or encourage them to visit the urban landscape (1) as many times as possible.

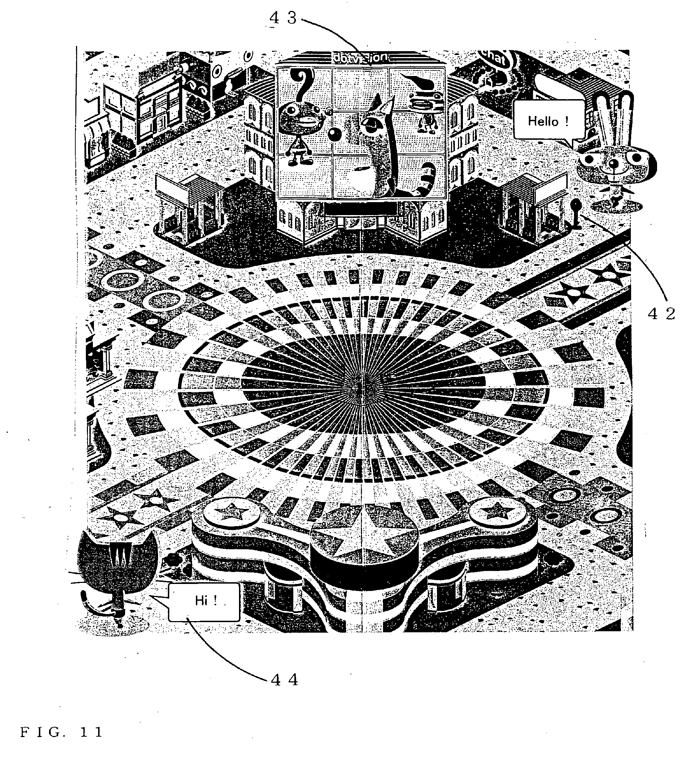

As one of the efforts, the embodiment preferably is adapted to place dot points (42) as shown in FIG. 11 at main places, particularly at the places which were advertised to hold events to customers, in a facility in the urban landscape (1), count and add (28) the number of times the other person's avatar(36) crosses the dot points (42) as the avatar passes the dot points (42) or stop by the dot points (42) or buys goods at the dot points (42) with a well-known means, and give a particular incentive (29) to the other person's avatar (36) according to the number of times the avatar passed the points.

In this case, the incentive points are preferably given to the avatar according to the avatar's contribution such as when the avatar forms a society with companions of a common interest or preference or when the avatar becomes an owner of a society and increases its members.

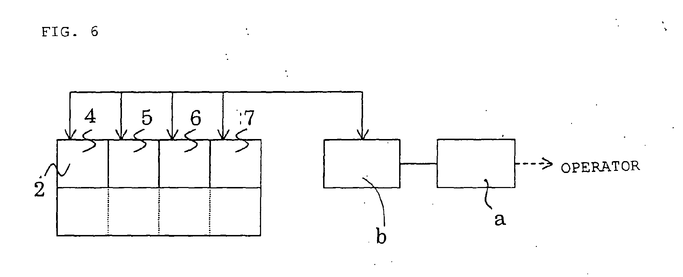

As shown in FIG. 6, the embodiment has means for recording (saving) (a) information on acts and shopping of the self avatar and/or the other person's avatar or immediately displaying the information in the urban landscape (1) by using Shockwave Player (b) or the like, which is displayed by a well-known browser (such as Internet Explorer), without requiring any particular application in downloading the information.

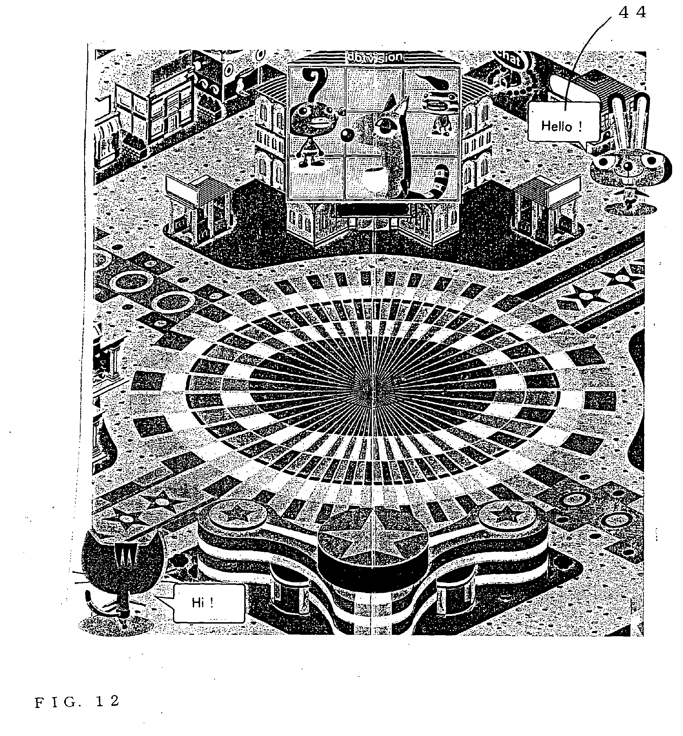

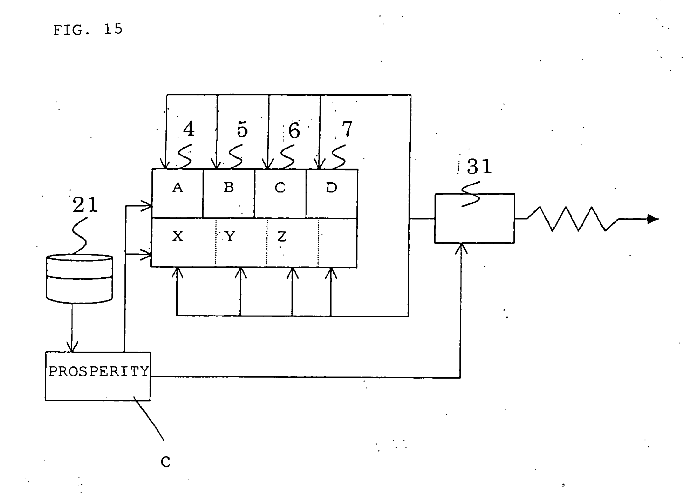

As shown in FIGS. 11, 12 and 15, Dotblogs (43) are preferably placed in predetermined places, a self avatar's flat, or a hotel in the urban landscape (1).

In the Dotblogs (43), unrestricted advertisements for sales promotion, notes for oneself, public relations, a comment for the other persons, a diary, or a trace of a friend who has visited the place are displayed by well-known means.

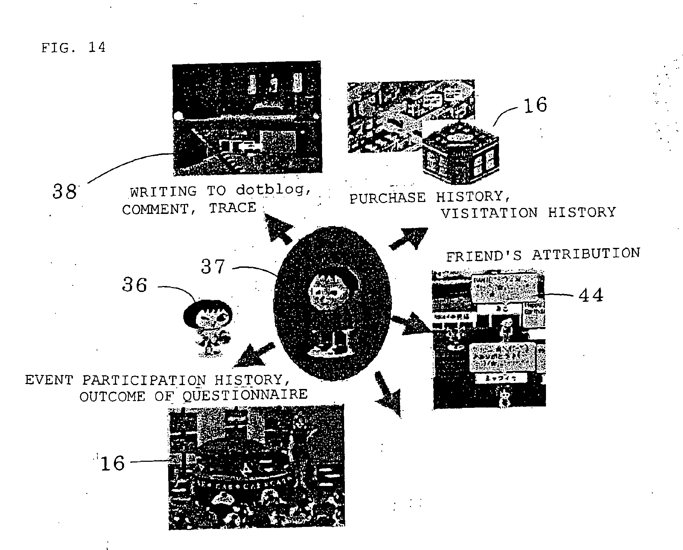

Information is not limited to be displayed on the Dotblogs (43). Introduction of goods on sale or prices and descriptions of various goods and tickets may be created by a program for creating Dotblogs (43) and a program for creating a balloon (30), described by a writing program (31) and displayed in a balloon (44) as shown in FIGS. 11, 12 and 14.

It is attractive to use the balloon (44) for the chat (27) conversation in making friends with someone. As a conversation only between friends may be displayed in the balloon (44), the embodiment should be adapted to allow the contents of the Dotblogs (43) to be shown for specific members only as well as to open to the public.

It is important to implement the present invention that prosperity is set (E) such that the Dotblogs (43) including the advertisement is charged higher prices for notices (A), (B), (C), (D) and the like at a so-called downtown in the urban landscape (1), i.e., the place crowded with many people and charged for the other notices (X), (Y) and (Z) lower than the prices for the notices (A), (B), (C), (D) and the like.

The embodiment has a publicly-known accounting system (33) for a producer (32) (an actual person, an owner) of the urban landscape (1) to collect a predetermined royalty as a producer fee from the sales of each outlet. The system has an authority and administration means to add a penalty (34) of closing an outlet or charging the outlet for a predetermined amount of rent when the sales of the outlet are lower than a predetermined value.

In FIG. 7, the urban landscape (1) has a downtown in the center. It costs the highest to open an outlet in this area. It costs the highest to open an outlet in the area denoted by the reference numeral (50) in the figure next to the downtown. The area denoted by the reference numeral (51) is an area in which it costs the highest to open an outlet next to the area (50).

In this embodiment, it is a matter of course that the downtown in the center is the most crowded with people followed by the other less crowded areas such as the area (50), then the area (51) in the descending order.

Although three areas are set for crowded areas here, the crowded areas may be divided into more than three stages or into only two stages.

The embodiment has means for displaying Dotblogs (43) at a predetermined place or a self avatar's flat or a hotel in the urban landscape (1) as shown in FIG. 7, wherein unrestricted advertisements for sales promotion or notes for oneself or public relations, a comment for the other persons, a diary, or a trace of a friend who has visited the place are not only displayed in the urban landscape (1) but also displayed on the network as a homepage for releasing the contents of the Dotblogs (43) to public or only to specific persons.

The Dotblogs (43) including the advertisement can be charged higher prices in places so-called downtowns which are crowded with many people and charged for the other places lower than the prices for the downtowns.

That is to say, the central downtown is an area including a central tower of the urban landscape (1) and its surroundings which is considered as the most attractive place for self avatars and the other persons' avatars. It is a matter of course that a price for displaying the Dotblogs (43) in the central downtown is high.

It is also a matter of course that prices for displaying the Dotblogs (43) in places at a distance from the central tower are lower than the prices in the central downtown.

The ranking of the prices of displaying the Dotblogs (43) is merely an initial setting and the ranking may be changed thereafter according to the number of self avatars (37) calculated at a predetermined period of time.

Therefore, an area started as a downtown may be lowered in ranking or an area started as lower in ranking of the prices may become a downtown.

It is also important to set charges different for opening outlets (2) in respective areas. Even in the same area, charges for opening outlets differ for each floor.

Charges for opening outlets (2) may be set different according to the period of operating the outlet (contract) such that a charge for operating an outlet (2) for a short period is two thirds of that for a long period. An outlet may be a prepared store which is built and managed by a producer (32) or an owner which is an actual person, or may be drawn by a person who opens the outlet.

In the first case, an operator preferably selects an outlet from a list of outlets (2) when the operator conducts formalities to open an outlet. In the latter case, the operator builds and manages an original outlet which the operator draws by using illustration software.

A method for building and managing an outlet is to put a sent original outlet in a specified place.

It is also important to previously set a dot point indicator (49) at a predetermined place in the urban landscape (1). Then, the system can record and count the number of times a self avatar (37) who comes and goes in the urban landscape (1) visits or passes through the point indicator (49) and discount services or goods at the facility or give an invitation to the facility based on the counted number of times or obtain data based on the preference of the self avatar (37).

The self avatar (37) may select the other person's avatar operated by the other operator and send various types of information signal to the avatar. The means for selecting and sending the signal are not described in detail here. The means typically consist of selecting and sending programs in the previously downloaded programs and a sending unit.

The various means for exchanging information or inquiring may be a system linked by a local area network (LAN) at a self avatar's (37) terminal device.

The self avatar makes friends with the other persons' avatars in this manner. In such a case, the self avatar (37) may be a founder (owner) to make a society with some of the other person's avatars.

A place for the self avatars (37) and/or the other persons' avatars (36) to get together may be preferably set in the central point (201) or the park (205) in the urban landscape (1).

The system has means for determining a place for self avatars (37) to get together as mentioned above. In such a case, the means retrieve place information previously stored in the server (35) and rank the places in easiness for avatars to get together.

The system also has menans for calculating the number of self avatars (37) in each place of the urban landscape (1) by predetermined time period and ranking the places for avatars to get together. As the first means calculates the number of self avatars (37) by predetermined time period and determines ranking of the places for avatars to get together, the means adds attraction to the system such that ranking of the places for avatars to get together changes by predetermined time period.

Although a process for calculating the number of self avatars (37) is performed for a certain time period, such as for every hour or every twelve hours, the process is not limited to be performed by every hour or every twelve hours and may be performed daily, monthly or the like.

Although the above-mentioned two means are described in the embodiment, the means may be combined to determine a place for avatars to get together. That is to say, the system most preferably uses a fixed ranking means in the initial stage of developing the urban landscape (1) and uses a fluctuation ranking means after the initial stage so that the number of self avatars (37) is summed for each four months and a place for avatars to get together is determined based on the sum.

A charge for opening an outlet is preferably set based on determination made by a place determination unit. That is to say, the more the self avatars (37) and/or the other persons' avatars (36) are easily get together at a place, the higher the charge for opening an outlet is set.

A charge for opening an outlet is previously set and different charges for opening an outlet are set for each area for opening outlets. A charge for opening an outlet may be set according to a ratio of the number of the self avatars (37) and/or the other persons' avatars (36) having visited the place to all the operators' self avatars (37) and/or the other persons' avatars (36) in the urban landscape (1), instead of according to the sheer number of the self avatars (37) and/or the other persons' avatars (36) having visited the place.

It is a matter of course that predetermined information including flyers, new products information, event information, discount information and advertisement displayed on the Dotblogs (43) or distributed to a room (38) of a self avatar (37) may include what are created by a producer (32) (owner) as well as information inputted by operators of the self avatars (37) and/or the other persons' avatars (36).

The system may install an announcing medium other than the Dotblog (43), such as an advertising tower or audio broadcasting, to announce predetermined information in the urban landscape (1).

Although it is neither described nor shown in detail in a figure, the server (35) has an outlet opening proceeding unit, for example, which receives and accepts a request for opening an outlet from an applicant for opening an outlet or a request to deliver advertisement from a sponsor (user), and returns a response indicating that the request is accepted.

When a sponsor clicks a mouse button on a logo indicating the outlet opening procedure, an outlet opening accepting unit retrieves an input format for proceeding to open an outlet from the stored server (35) and displays the format on a sponsor's terminal device. The input format has a column for determining a place and a charge for opening an outlet. When the sponsor fills out and sends the format for proceeding to open an outlet, the server (35) usually stores the contents of the outlet opening procedure again.

Information such as flyers distributed to the Dotblog (43) or delivered to the room (38) of the self avatar (37) includes a message made by an individual such as "to invite who likes go fishing" as well as information mainly made by sponsors. A manner to manage the information is to retrieve a format for inputting information providing procedure from the stored server (35) and display the format on a sponsor's terminal device.

The sponsor inputs new products information, event information, discount information, advertisements or the like in the input format. Then the inputted predetermined information may be sent to an information unit and displayed in a form of Dotblog (43) or in a form of "flyer".

In the embodiment of the present invention, the urban landscape (1) of the present invention may preferably include means for asking for a guide in the urban landscape (1). In such a case, it is attractive to adapt the means not only to call a server (35) from a self avatars' (37) terminal devices, search the previously set information for information to respond to the inquiry and provide the information for the self avatar (37), but also to choose one or more from the personal characters which strolls in the urban landscape (1) as ushers (11) for guiding the urban landscape by chatting style (27).

The inquiry accepting means may be publicly known means which accepts an inquiry for a guiding character from a self avatar's (37) operator and sends the inquiry to a responding unit provided in the server (35) and has a function as inquiry accepting means.

When the inquiry accepting means receives signals for making inquiry from an operator, it retrieves a predetermined input format from the recording unit. As an example, a self avatar (37) inputs inquiry in the input format.

Dialogs may be displayed in the balloon (44). Dialogs may also be displayed on a Dotblog (43) screen on the urban landscape (1) as hiding a part of the screen completely or as showing a part of the screen transparently. The two types of display may be selected or fixed to one.

Although methods for displaying an usher (character) or responding to inquiry are almost the same as those of the chat (27), the methods are adapted to make the usher nod or do some action in response to the signals of an inquiry from an operator.

Although the usher is adapted to give a previously stored response, a special guiding character operated by an operator may be set to talk with a self avatar (37) with the same mechanism as that of the self avatar (37). A self avatar (37) may also talk with the guiding character wherever the self avatar (37) is.

Records of the guiding, a note or electric mail addresses of the friends or a society may not be necessarily sent to a user. When a self avatar (37) receives such things, the operator who operates the self avatar (37) may select some from what is described there and save them in another file in the operator's terminal device.

The description stored in mail software or saved in another file is not limited to a name and an electric mail address and may include a street address, a telephone number, a homepage address (URL), for example. The description may also be limited to an electric mail address. The system may simply display what is described on a business card in the urban landscape (1) without sending it to the operator's terminal device.

The system needs not have an atmosphere setting function based on time information. If operators, who are participating in the urban landscape (1) from the different areas on the globe which greatly differ in time information, for example from abroad, are dating in different atmosphere, the operators may not enjoy conversation and the date.

The atmosphere setting function is preferably set by an operator's selection. The urban landscape (1) may be managed inside a closed communication network such as a LAN instead of managed via the Internet.

The embodiment has means for an operator to buy various goods or tickets and accounting means for the purchase so that the operator can search for the goods or tickets on the network at a web site for searching such as google to buy the goods or tickets.

It is a matter of course that all the acts of the user can be recorded and played in a database or the like in another embodiment.

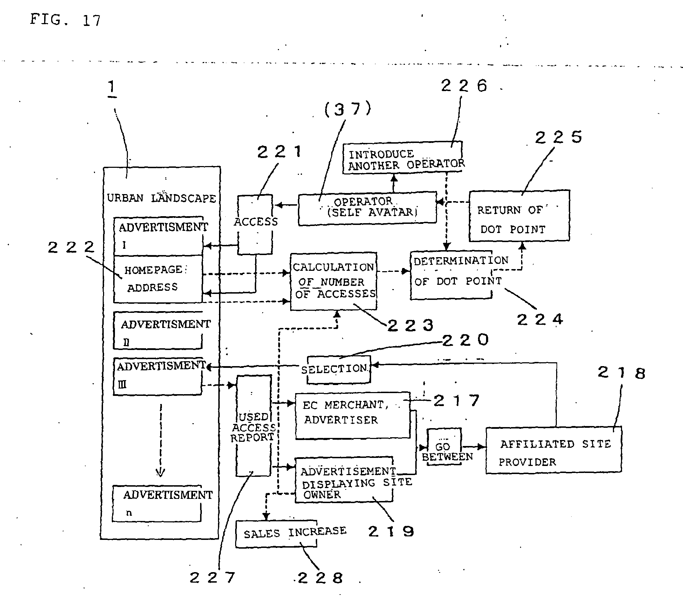

As mentioned above, the Dotblog (43) including information displaying section as a so-called advertisement is preferably placed at predetermined places or a self avatar's flat or a hotel in the urban landscape (1). In information displaying sections (I), (II), (111) ... (n) as advertisement, necessary or optional goods, many of which are sold by an EC merchant advertiser (217), are preferably drawn by characters or images or a combination of them as shown in FIG. 17.

That is to say, when the self avatar (37) gets interested in an advertisement (I) in an urban landscape (1), accesses the advertisement (I) and clicks a mouse button on it, an enlarged information displaying section (I) (not shown) is displayed. If the self avatar (37) wants to buy the goods, the self avatar (37) follows the same procedure as that mentioned above.

When the self avatar (37) wants to know reliability of the company which manufactured the goods from the detailed description of the goods or the scale of the company in the advertisement, the self avatar (37) can immediately open the homepage of the company only by clicking a mouse button on a homepage address (222) included beside the advertisement (I).

In such a case, another access times calculating mechanism (223) counts the number of times the self avatars (37) or the other persons' avatars (36) accessed the advertisement (I). Evaluation of the dot points is calculated according to the number of times (224), and the dot points are returned to the self avatar (37) (225).

In such a case, when the self avatar (37) invites the other person's avatar (36) to show the advertisement (i) and the other person's avatar (36) accesses the advertisement (I), appropriate dot points are given to the self avatar (37).

In FIG. 17, when the number of times the self avatars (37) and the other persons' avatars (36) access the advertisement increases, used access information (227) is preferably provided for the EC merchant advertiser (217) or an advertisement displaying site owner (219) or an affiliated site provider (218). When the sales of the goods is increased (228), the increased amount is preferably returned to the access times calculating (223) system as a special bonus.

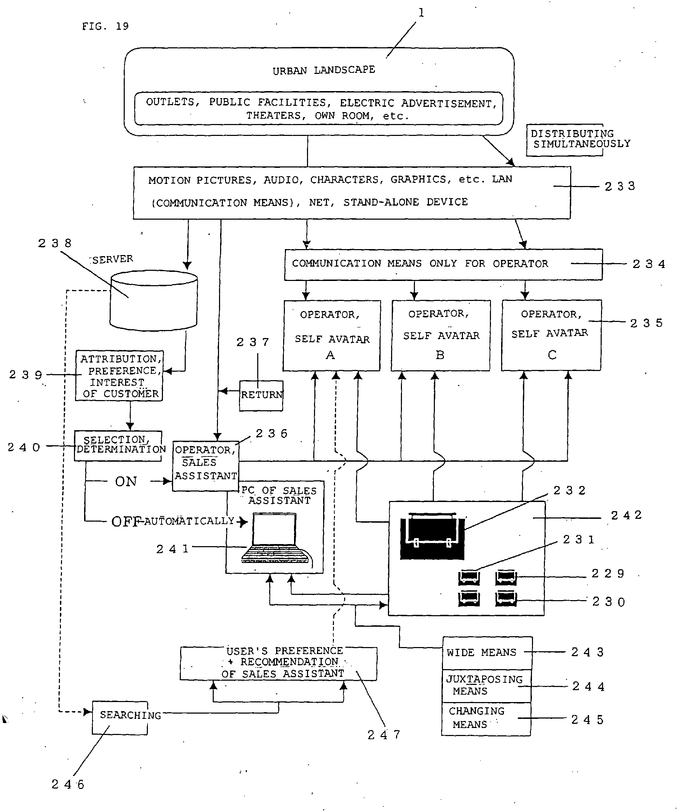

The urban landscape (1) has calling means (233) with a configuration using motion pictures and audio over networked circuits including a wired or a wireless LAN or a stand-alone device as shown in FIG. 19. The calling means (233) has not only means only for a self avatar (37) to call (234) but also means for talking with plural shoppers (operators) simultaneously. The calling means (233) also has means for selecting one or more from still pictures including a character, a graphic and a photograph and/or motion pictures and audio, and combining them.

It is important to configure calling information from communication means (235) to be recorded in a recording medium such as a server system (238). In such a case, the calling information from the communication means (235) is in the calling means (233) with one or more persons by using motion pictures and audio over a networked circuits including a wired or wireless LAN or a stand-alone device. When the calling means (233) forms a calling formed means actually with one sales assistant (236), the calling information can provide a various questions and answers, various recommended goods, colors, sizes and the other various types of information on sales.

Personal information in the communication means (234) of an operator or a self avatar (37), in particular, made by the communication means (235) may be previously disclosed to the sales assistant (236).

In such a case, when the calling information is not received by the sales assistant (236) as the sales assistant (236) is not there, it is important to store still pictures including a character, a graphic and a photograph and/or motion pictures and audio on a display of a personal computer and/or various mobile terminal devices of the sales assistant.

The calling means (233) has wide function means (243) for enlarging and displaying an image which is displayed on a display of a personal computer (242) and/or various mobile terminal devices of the communication means (234) only of the sales assistant (236) and/or the self avatar (37) and desired by one or more persons, such as an image of goods A (229) to (231).

The calling means (233) preferably have juxtaposing means (244) for juxtaposing and displaying one or more desired images shown on a display (242) of a personal computer and/or various mobile terminal devices of the sales assistant and/or the self avatar (37).

In the embodiment, the communication means (235) between a sales assistant and a self avatar (37) has also means (245) for changing an image of certain goods information to an image of the other goods information at any time when a personal computer (241) of the sales assistant is operated so.

The communication means (235) between a sales assistant (236) and a self avatar (37) has means for obtaining preference and information desired by the shopper (239), means for searching for (246) and retrieving selection and determination (240) which is information matching or resembling the shopper's requirement previously recorded in the server (238), and recommending means (247) for providing such information with shopper's advisory information by image or character or graphic for the shopper.

As described above, according to the present invention, operators not only can enjoy shopping by communicating with each other but also can exchange information with high secrecy. According to the other inventions, operators can do shopping with reality as if they are actually doing shopping.

### Description of Symbols

- A: notice
- B: notice
- C: notice
- D: notice
- E: setting of prosperity
- X: notice
- Y: notice
- Z: notice
- a: record (save)
- b: Shockwave Player
- 1: urban landscape
- 2: outlet
- 3: start
- 4: food shop zone
- 5: sports/hobby zone
- 6: living zone
- 7: zone for female company employees
- 8: place for displaying news
- 9: character
- 10: creation
- 11: selection
- 12: for pay
- 13: free of charge
- 14: creation
- 15: accounting system
- 16: finding out
- 17: means for sending direct mail
- 18: weight
- 19: data
- 20, 21: record
- 22: calculation
- 23: selection
- 24: record
- 25: form a group or a society
- 26: act
- 27: chat
- 28: counting and adding
- 29: incentive
- 30: program for creating a balloon
- 31: writing program
- 32: producer
- 33: accounting system
- 34: penalty addition
- 35: server
- 36: the other person's avatar
- 37: self avatar
- 38: own room (room)
- 39: tool bar
- 40: new window
- 41: determination means
- 42: dot point
- 43: Dotblog
- 44: balloon
- 45: menu screen for collecting members of groups and societies
- 46: display
- 47: the number of participants
- 48: the number of registered members
- 49: dot point indicator
- 50: area
- 51: area
- 201: monument (central point)
- 202: fashion zone
- 204: young zone
- 203: leisure zone
- 205: park
- 206: homemaker's zone
- 207: food zone
- 208: residential zone
- 209: kids zone
- 210: electrical home appliance zone
- 211: middle zone
- 212: intelligent zone
- 213: zone for female company employees
- 214: sundries and notions zone
- 215: "YES" button
- 216: "NO" button
- 217: advertiser
- 218: agent
- 219: owner
- 220: selection
- 221: access
- 222: homepage address
- 223: calculation
- 224: determination
- 225: return
- 226: introduction
- 227: report
- 228: increase
- 229: goods A
- 230: goods B
- 231: goods C
- 232: recommended goods
- 233: calling means
- 234: means for only calling an operator
- 235: communication means
- 236: sales assistant (operator)
- 237: return
- 238: server
- 239: inputting means
- 240: selection, determination
- 241: personal computer of a sales assistant
- 242: personal computer of a shopper
- 243: wide means
- 244: juxtaposing means
- 245: changing means
- 246: searching
- 247: sales assistant's recommendation
- I, II, III, n: information displaying section

## Claims

1. A system of developing an urban landscape by using electronic data comprising:
means for displaying an urban landscape with a food shop zone including a cluster of various restaurants, a sports/hobby zone including baseball stadiums and pools, a living zone including flats and public facilities, a zone for female company employees to get together, and news including weather forecast, fortune-telling and the like as a virtual town and/or a town with reality on a display of a personal computer and/or various mobile terminals, or for displaying an urban landscape as if new facilities are constructed with time;
means for plural characters of persons to act freely in said urban landscape including to stroll there, to enjoy shopping, to take a walk and stop by somewhere the person likes, to do or watch sports, and to go to theater;
means for creating a self avatar which acts in the same manner as that of said freely acting character of a person in response to a desired inputted command and for issuing the command; and
means for registering the self avatar on a network for pay and/or free of charge.

2. The system of developing an urban landscape by using electronic data according to claim 1, further comprising means for the self avatar to use a room of the flat in the urban landscape shown in claim 1 for pay and/or free of charge in response to a request.

3. The system of developing an urban landscape by using electronic data according to claim 2, further comprising means for sending direct mail about various events to be held at facilities in said urban landscape to said room of the flat.

4. The system of developing an urban landscape by using electronic data according to claims 1 to 3, further comprising means for recording the free acts of said self avatar in the urban landscape, selecting preference of the self avatar, and sending said direct mail based on the preference to the self avatar's room in the flat.

5. The system of developing an urban landscape by using electronic data according to claims 1 to 4, further comprising means for calculating preference of the self avatar with a scheme which weighs the interests and preference such as by counting the number of times the self avatar visits a sports gear sales zone, for example, to weigh "data" based on the calculation to select preference of the self avatar.

6. [Action point]
The system of developing an urban landscape by using electronic data according to claims 1 to 5, further comprising means for recording facilities and outlets to which the character of a person freely acting in said urban landscape visits, counting the number of times the character visits the facilities and outlets, and obtaining data for the basis of discount at or invitation to the facilities according to the counted number.

7. [Creating group or society]
The system of developing an urban landscape by using electronic data according to claims 2 and 3, further comprising:
means for the self avatar to enjoy a space of his own in said the avatar's flat, also to invite companions who have the same interest as that of the self avatar or close friends whom the self avatar got to know on the network or the like into the room and form a group or a society with the persons, wherein the members of the group or the society go out into the urban landscape and make many new friends or make a new group or a new society with new companions or a new society who have the same interest as those of the self avatar.

8. The system of developing an urban landscape by using electronic data according to claims 2, 3 and 7, further comprising means for the registered self avatar to register said friends and society on the network for pay and/or free of charge.

9. The system of developing an urban landscape by using electronic data, further comprising means for collecting attribute information on the friends and society shown in claim 7, by which the self avatar can collect unique data, so that highly reliable evaluations on the community can be obtained.

10. The system of developing an urban landscape by using electronic data according to claims 1 to 9, further comprising:
means for enabling a self avatar to do chat communication with companions who have the same interest as that of the self avatar or close friends via an image distribution system or the like; and means for enabling the self avatar to keep in touch with the companions or the friends.

11. The system of developing an urban landscape by using electronic data according to claims 1 to 10, further comprising:
means for enabling a self avatar to buy various goods or tickets at facilities in said urban landscape and accounting means, wherein the operator can also search for goods or tickets on the network at the web sites which provide searching services such as "google" to buy the goods or the tickets.

12. The system of developing an urban landscape by using electronic data according to claims 1 to 11, further comprising:
means for placing "dot points" at main places in said urban landscape; and
means for adding the "dot points" as a self avatar passes a plurality of the "dot points" and providing a specific incentive for the operator according to the amount of the points so as to encourage the operator to participate in the urban landscape and visit more outlets or the like in the urban landscape.

13. The system of developing an urban landscape by using electronic data according to claims 1 to 12, further comprising:
means for providing said dot points for an operator when the operator increases the member of a society which the operator has formed as an owner with said companions who get along with the operator on the same interest or the same pursuit as that of the operator.

14. The system of developing an urban landscape by using electronic data according to claims 1 to 13, wherein the descriptions of the facilities in said urban landscape or the prices and descriptions of various goods or tickets are displayed in balloons.

15. The system of developing an urban landscape by using electronic data according to claims 1 to 14, further comprising means for enabling an operator to immediately enter into (be displayed in) said urban landscape by using Shockwave Player which is displayed by well-known browsers (e.g., Internet Explorer) without requiring a specific application when the operator downloads said urban landscape.

16. The system of developing an urban landscape by using electronic data according to claims 1 to 15, further comprising:
means for displaying Dotblogs at a predetermined place, a flat where a self avatar uses, a hotel in said urban landscape so that unrestricted advertisement for sales promotion or notes for oneself or public relations, a comment for the other persons, a diary, or a trace of a friend who has visited the place are not only displayed in the urban landscape but also displayed on the network as a homepage for releasing the contents of the Dotblogs to public or only to specific persons.

17. The system of developing an urban landscape by using electronic data according to claims 1 to 16, wherein all said acts can be recorded on a database or the like and played back.

18. The system of developing an urban landscape by using electronic data according to claims 1 to 17, further comprising:
accounting system means which has a producer of said urban landscape and the producer collects a certain royalty as a producer fee from the sales of each of the outlets; and penalty adding means for closing a outlet or charging the outlet for a predetermined amount of rent if the sales of the outlet is lower than a predetermined value.

19. A system of developing an urban landscape by using electronic data, comprising:
means for displaying an urban landscape with a food shop zone including a cluster of various restaurants, a sports/hobby zone including baseball stadiums and pools, a living zone including flats and public facilities, a zone for female company employees to get together, and Dotblogs of news including weather forecast, fortune-telling and the like as a virtual town and/or a town with reality on a display of a personal computer and/or a mobile device, or for displaying an urban landscape as if new facilities are constructed with time, and for plural characters of persons to act freely in said urban landscape including to stroll there, to enjoy shopping, to take a walk and stop by somewhere the person likes, to do or watch sports and to go to theater, and for creating a self avatar which acts in the same manner as that of said freely acting character of a person in response to another desired inputted command and for issuing the command;
means for registering the self avatar on a network for pay and/or free of charge;
means for said self avatar to use a room of the flat in said urban landscape for pay and/or free of charge in response to a request from an operator;
means for sending direct mail about various events to be held at facilities in said urban landscape to the room;
means for recording the free acts of said self avatar in the urban landscape, selecting preference of the self avatar, and sending said direct mail based on the preference to the self avatar's room in the flat;
means for calculating preference of the self avatar with a scheme which weighs interests and preference such as by counting the number of times the self avatar visits a sports gear sales zone, for example, to weigh "data" based on the calculation to select preference of the self avatar;
a system of recording facilities and the like to which the character of a person freely acting in the urban landscape visits, counting the number of times the character visits the facilities and the like, and obtaining data for the basis of discount at or invitation to the facilities according to the counted number; a system of said self avatar to enjoy a space of his own in the avatar's flat, also to invite companions who have the same interest as that of the self avatar or close friends whom the self avatar got to know on the network or the like into the room and form a group or a society with the persons, wherein the members of the group or the society go out into the urban landscape and make many new friends or make a new group or a new society with new companions or a new society who have the same interest as those of the self avatar;
a system of the registered self avatar to register the friends or society on the network for pay and/or free of charge;
a system of collecting attribute information on said friends or society, by which the self avatar can collect unique data, so that highly reliable evaluations on the community can be obtained;
a system of enabling a self avatar to do chat communication with the companions who have the same interest as that of the self avatar or close friends via an image distribution system or the like;
a system of enabling the self avatar to keep in touch with the companions or the friends;
a system of enabling a self avatar to buy various goods or tickets at facilities in said urban landscape and an accounting system, wherein the operator can also search for goods or tickets on the network at the web sites which provide searching services such as "google" to buy the goods or the tickets;
a system of placing "dot points" at main places in said urban landscape;
a system of adding the "dot points" as a self avatar passes a plurality of the "dot points" and providing a specific incentive for the operator according to the amount of the points so as to encourage the operator to participate in the urban landscape and visit more outlets or the like in the urban landscape;
a system of providing said dot points for an operator when the operator increases the member of a society which the operator has formed as an owner with said companions who get along with the operator on the same interest or the same pursuit as that of the operator;
wherein the descriptions of the facilities in said urban landscape or the prices and descriptions of various goods or tickets are displayed in balloons;
a system of enabling an operator to immediately enter into (be displayed in) said urban landscape by using Shockwave Player which is displayed by well-known browsers (e.g., Internet Explorer) without requiring a specific application when the operator downloads the urban landscape;
a system of displaying Dotblogs at a predetermined place, a flat where a self avatar uses, a hotel in said urban landscape so that unrestricted advertisement for sales promotion or notes for oneself or public relations, a comment for the other persons, a diary, or a trace of a friend who has visited the place are not only displayed in the urban landscape but also displayed on the network as a homepage for releasing the contents of the Dotblogs to public or only to specific persons;
wherein all said acts can be recorded on a database or the like and played back;
an accounting system of a producer of said urban landscape to collect a certain royalty as a producer fee from the sales of each of said outlets; and
a penalty adding system of closing a outlet or charging the outlet for a predetermined amount of rent if the sales of the outlet is lower than a predetermined value.

20. The system of developing an urban landscape by using electronic data according to claims 1 to 19, comprising an advertising information displaying section such as a banner at an appropriate place in said virtual town and/or said town with reality, wherein said displaying section displays necessary OR/AND optional information in the information by characters or image information with a link to another site (homepage) on the network.

21. The system of developing an urban landscape by using electronic data according to claims 1 to 20, comprising an advertisement displaying site owner in a virtual town and/or a town with reality which displays the advertising information displaying section such as a banner, an advertiser such as an EC merchant, an advertising information displaying section such as a banner, and a banner advertisement agent called an affiliated service provider for going between the advertisement displaying site owner and the advertiser; wherein a self avatar in the virtual town and/or the town with reality chooses an information displaying section displayed on the virtual town and/or the town with reality, and when the self avatar selects (clicks a mouse button on) the information displaying section, the page transfers to the advertiser's site (homepage) via a preset link, and when the self avatar accesses the advertiser's site (homepage), the advertiser pays a fee or a reward to the advertisement displaying site owner and/or the advertisement agency.

22. The system of developing an urban landscape by using electronic data according to claims 1 to 21, comprising:
means for an operator to buy various goods or tickets at facilities in said urban landscape;
accounting means;
means for placing "dot points" at main places in said urban landscape;
means for adding the "dot points" as a self avatar passes a plurality of the "dot points" and providing a specific incentive for the operator according to the amount of the points so as to encourage the operator to participate in the urban landscape and visit more outlets in the urban landscape; and
means for converting a fee or a reward paid to said advertisement displaying site owner and/or said advertisement agency to "dot points" so that the advertisement displaying site owner and/or the advertisement agency can pay a part or whole of the fee or the reward to a self avatar in a virtual town and/or a town with reality as "dot points".

23. A system of developing an urban landscape by using electronic data, wherein the fee or the reward described in claims 1 to 22 is required every time when the self avatar selects (clicks a mouse button on) the advertiser's site (homepage).

24. A system of developing an urban landscape by using electronic data, wherein the fee or the reward described in claims 1 to 23 is required according to the number of times an advertisement information displaying section such as a banner is displayed in a virtual town and/or a town with reality.

25. A system of developing an urban landscape by using electronic data, wherein the fee or the reward described in claims 1 to 24 is required according to whether or not the self avatar selects (clicks a mouse button on) the advertiser's site (homepage) and buys something there or is registered to the company via the advertisement.

26. A system of developing an urban landscape by using electronic data, wherein the fee or the reward described in claims 1 to 25 is required when the self avatar introduces a new self avatar.

27. A system of developing an urban landscape by using electronic data, wherein the advertisement information displaying section such as a banner described in claims 1 to 26 includes a poster, a sign board, an advertising balloon, an electronic bulletin board (dot vision), an airship, various handed out presents, word of mouth, a town guiding magazine, and a mail-order catalogue displayed in a virtual town and/or a town with reality.

28. A system of developing an urban landscape by using electronic data, comprising:
means for displaying an urban landscape with a food shop zone including a cluster of various restaurants, a sports/hobby zone including baseball stadiums and pools, a living zone including flats and public facilities, a zone for female company employees, and news including weather forecast, fortune-telling and the like as a virtual town and/or a town with reality on a display of a personal computer and/or various mobile terminals, or for displaying an urban landscape as if buildings are constructed as new facilities with time;
means for plural characters of persons to act freely in said urban landscape including to stroll there, to enjoy shopping, to take a walk and stop by somewhere the person likes, to do or watch sports and to go to theater;
means for creating a self avatar which acts in the same manner as that of the freely acting character of a person in response to another desired inputted command and for issuing the command;
means for enabling the self avatar to be registered on the network for pay and/or free of charge; and
calling means with a configuration for using motion pictures and audio over networked circuits including a wired or a wireless LAN or a stand-alone device;
wherein the calling means is means for enabling an operator to talk with plural operators simultaneously, and the calling means has means for selecting one or more still pictures including characters, graphics and photographs and/or motion pictures and audio and combining them.

29. A system of developing an urban landscape by using electronic data, wherein the calling means with a configuration which can record as calling information by the communication means described in claim 28 on a recording medium in a server system or the like.

30. A system of developing an urban landscape by using electronic data, comprising calling means for an operator to talk with one or more operators by using motion pictures and audio over network circuits including a wired or a wireless LAN or a stand-alone device as calling information by the communication means described in claim 28, wherein only the above-mentioned one or more operators such as self avatars or sales assistants can talk with each other.

31. A system of developing an urban landscape by using electronic data, comprising calling means for an operator to talk with one or more operators by using motion pictures and audio over networked circuits including a wired or a wireless LAN or a stand-alone device as calling information by the communication means described in claim 28; wherein the means actually has a form of talking with an operator such as a sales assistant and provides various questions and answers and the other various types of information on sales including information on various recommended goods, colors and sizes.

32. The system of developing an urban landscape by using electronic data described in claim 31, further comprising means for previously disclosing personal information particularly on a shopper (operator) provided by said communication means to said sales assistant (operator).

33. A system of developing an urban landscape by using electronic data, comprising means for storing still pictures including characters, graphics and photographs and/or motion pictures and audio of calling information by the communication means described in claims 28 to 32 on a display of a personal computer and/or various mobile terminals of an operator (sales assistant), if the pictures are not received due to such as absence of the sales assistant (operator).

34. A system of developing an urban landscape by using electronic data, comprising a function of enlarging and displaying an image of calling information by the communication means described in claims 28 to 33 desired by one or more persons which is displayed on the display of a personal computer and/or various mobile terminals of a sales assistant (operator) and/or a shopper (operator).

35. A system of developing an urban landscape by using electronic data, comprising means for displaying side by side the images of calling information by the communication means described in claims 28 to 35 desired by one or more persons which is displayed on the display of a personal computer and/or various mobile terminals of a sales assistant (operator) and/or a shopper (operator).

36. A system of developing an urban landscape by using electronic data, comprising communication means between the sales assistant (operator) and shopper (operator) described in claims 28 to 36 which enables an image of certain goods information to be changed to an image of other goods information as required.

37. A system of developing an urban landscape by using electronic data, wherein the communication means between the sales assistant (operator) and the shopper (operator) described in claims 28 to 36 has means for obtaining shopper's preference and requirement information, means for retrieving information matching or resembling the previously recorded shopper's requirement, and means for providing shopper's advisory information by images or characters and graphics for the information.
